# FASCICULE DE BREVET EUROPEEN

(11) **EP 4 222 006 B1**
(45) Date de publication et mention de la délivrance du brevet: **25.12.2024**
(21) Numéro de dépôt: 21778457.8
(22) Date de dépôt: 20.09.2021
(51) Int. Cl.: B60H 1/00, B60H 1/14, H01M 8/04029, B60H 1/22

(54) **PROCÉDÉ DE CHAUFFAGE D'UN HABITACLE DE VÉHICULE ÉLECTRIQUE ÉQUIPÉ D'UN PROLONGATEUR D'AUTONOMIE**
VERFAHREN ZUM BEHEIZEN EINES INNENRAUMS EINES ELEKTROFAHRZEUGS MIT REICHWEITENVERLÄNGERUNG
METHOD FOR HEATING A PASSENGER COMPARTMENT OF AN ELECTRIC VEHICLE FITTED WITH A RANGE-EXTENDER

(30) Priorité: 30.09.2020 FR 2010002
(43) Date de publication de la demande: 09.08.2023
(73) Titulaire: Ampere SAS, 92100 Boulogne-Billancourt (FR)
(72) Inventeur: DAVID, Gerard, 78084 Guyancourt (FR)
(74) Mandataire: Renault Group
(86) Numéro de dépôt international: PCT/EP2021/075756
(87) Numéro de publication internationale: WO 2022/069271

(56) Documents cités:
- EP-A1- 2 657 053
- KR-B1- 101 619 874
- US-A1- 2012 122 000
- US-A1- 2018 272 877

## Description

La présente invention se rapporte au domaine des véhicules automobiles électriques. Plus particulièrement, l'invention concerne un procédé de chauffage d'un habitacle de véhicule automobile électrique équipé d'un prolongateur d'autonomie comprenant au moins une pile à combustible.

Les conditions environnementales influent sur la température de l'habitacle des véhicules. Une température d'habitacle trop haute ou trop basse peut engendrer une fatigue prématurée du conducteur et par conséquent peut influer sur la sécurité de celui-ci ainsi que celles des occupants du véhicule. Le système de chauffage et de ventilation d'une voiture est donc un équipement indispensable qui contribue au confort et à la sécurité des utilisateurs du véhicule.

Dans les véhicules électriques, le moteur électrique, alimenté par une batterie principale, ne dégage pas de chaleur susceptible d'être dirigée vers le système de chauffage et de ventilation pour chauffer l'habitacle. La batterie principale peut alors aussi être utilisée pour générer les calories nécessaires à un bon confort thermique dans l'habitacle en approvisionnant en électricité un dispositif de chauffage dudit habitacle. En conséquence, la charge de la batterie principale s'en trouve considérablement diminuée ainsi que l'autonomie du véhicule électrique.

Dans ces voitures électriques, la batterie principale peut être alimentée, en plus de la source externe, par une source d'énergie interne au véhicule comme par exemple une pile à combustible qui peut être alors utilisée comme prolongateur d'autonomie. La pile à combustible est électriquement montée en parallèle de la batterie principale. Le moteur électrique est alimenté en premier lieu par la batterie principale et, le cas échéant, par la pile à combustible, lorsque la charge de la batterie principale est insuffisante pour continuer à le faire, afin de produire de l'électricité et d'étendre le rayon d'action lorsque la batterie est totalement déchargée.

La production d'énergie électrique par une pile à combustible s'accompagne d'un dégagement de calories qui peut être exploité pour chauffer l'habitacle du véhicule. Ainsi le document EP2657053A divulgue un procédé de chauffage de l'habitacle consistant à utiliser, en fonction de la température extérieure et la température de l'habitacle, lorsque le véhicule est stationné, les calories produites par une pile à combustible ou les calories produites par le dispositif de chauffage. Ce procédé permet de valoriser les calories produites par la pile à combustible. Cependant, ce procédé est adapté pour un véhicule en stationnement, il donc est limité dans la gestion et l'optimisation de la batterie principale notamment lorsque le véhicule est en roulage. Par conséquent, la batterie principale peut présenter un risque d'usure prématurée raccourcissant alors l'autonomie du véhicule électrique. De plus, il y a un risque que le chauffage soit inadapté notamment lorsque le véhicule n'est plus en stationnement. Le document KR101619874 B1 présente des inconvénients similaires.

Le but de la présente invention est donc de résoudre au moins une partie des inconvénients décrits ci-dessus, en proposant notamment un procédé de chauffage d'un habitacle de véhicule prenant en compte l'état de charge de la batterie principale de manière à optimiser son utilisation et sa durée de vie.

La présente invention propose un procédé de chauffage d'un habitacle de véhicule électrique qui comporte au moins une batterie principale configurée pour alimenter électriquement une chaine de traction du véhicule électrique et pour participer à l'alimentation électrique d'un dispositif de chauffage de l'habitacle et pour être rechargée par une source extérieure d'énergie, un prolongateur d'autonomie comprenant au moins une pile à combustible configurée pour produire, dans un état de marche, une puissance électrique pour fournir une alimentation électrique alternative de la chaine de traction et/ou pour recharger la batterie principale, la production de puissance électrique par le prolongateur d'autonomie s'accompagnant d'un dégagement de calories susceptible d'être dirigé vers le dispositif de chauffage de l'habitacle. Le procédé de chauffage comprend une étape de détection du niveau de charge de la batterie principale, une étape de détermination d'un état de fonctionnement du prolongateur d'autonomie, une étape de sélection entre l'alimentation électrique du dispositif de chauffage par la batterie principale et le dégagement de calories par le prolongateur d'autonomie pour chauffer l'habitacle en fonction du niveau de charge de la batterie principale et de l'état de fonctionnement du prolongateur d'autonomie.

Le véhicule électrique est équipé d'une batterie principale qui alimente la chaine de traction du véhicule électrique et d'un prolongateur d'autonomie équipé d'au moins une pile à combustible qui est configuré pour alimenter la chaine de traction à la batterie principale et/ou recharger la batterie principale. Le procédé de chauffage de l'habitacle est mis en oeuvre par le système de gestion électronique qui prend en compte l'état de charge de la batterie principale et l'état de fonctionnement du prolongateur d'autonomie pour sélectionner la source de chauffage de l'habitacle. Le fait de prendre en compte l'état de charge de la batterie et l'état fonctionnement du prolongateur d'autonomie permet d'optimiser les cycles de charges et décharges de la batterie tout en évitant une surconsommation d'énergie pour des mises en marche intempestives de la pile à combustible. De plus la puissance électrique issue du prolongateur pour recharger la batterie principale permet en outre d'augmenter l'autonomie du véhicule notamment lors de trajets courts.

Il faut entendre ici, ainsi que dans tout ce qui suit, par « prolongateur d'autonomie » qu'un générateur de type pile à combustible est embarqué dans le véhicule électrique et qu'il est destiné à accroître l'autonomie de ce dernier en assurant la recharge de la batterie principale et/ou en alimentant directement la chaine de traction électrique.

Il faut entendre ici, ainsi que dans tout ce qui suit, par « source d'énergie extérieure » que la source d'énergie nécessaire au rechargement de la batterie principale est située à l'extérieur du véhicule et peut être par exemple un courant continu issu d'un superchargeur ou un courant alternatif d'une prise de courant d'une habitation.

Il faut entendre ici, ainsi que dans tout ce qui suit, par « état de fonctionnement » que le prolongateur d'autonomie est soit dans un état de marche c'est-à-dire qu'il produit une puissance électrique accompagnée d'un dégagement de calories soit dans un état d'arrêt auquel cas le prolongateur ne produit aucune puissance électrique.

Selon l'invention, l'étape de sélection comprend une sous-étape de comparaison entre le niveau de charge de la batterie principale détecté et un niveau seuil au-dessus duquel les calories dégagées par le prolongateur d'autonomie peuvent être utilisées pour chauffer l'habitacle et en-dessous duquel les calories dégagées par le prolongateur d'autonomie sont utilisées pour chauffer l'habitacle et la puissance électrique produite par le prolongateur d'autonomie peut être utilisée pour recharger la batterie principale.

Selon un mode de réalisation, si l'état de fonctionnement détecté est l'état de marche alors le dégagement de calories par le prolongateur d'autonomie est utilisé pour une opération de chauffe de l'habitacle.

Selon un mode de réalisation, si l'état de fonctionnement du prolongateur d'autonomie détecté est un état d'arrêt et si le niveau de charge de la batterie principale détecté est supérieur ou égal au niveau seuil, alors l'étape de sélection comprend une sous-étape de commande lors de laquelle une instruction d'alimentation en électricité du dispositif de chauffage est envoyé à la batterie principale de manière à ce que l'habitacle soit chauffé par le dispositif de chauffage. Autrement dit, au cours de cette sous-étape de commande le prolongateur d'autonomie reste en état d'arrêt tandis que la batterie principale fournit l'alimentation électrique nécessaire au dispositif de chauffage pour chauffer électriquement l'habitacle.

Selon un mode de réalisation, si l'état de fonctionnement du prolongateur d'autonomie détecté est un état d'arrêt et si le niveau de charge de la batterie principale détecté est inférieur au niveau seuil, alors l'étape de sélection comprend une sous-étape de mise en état de marche du prolongateur d'autonomie et les calories alors dégagées par le prolongateur d'autonomie sont utilisées pour chauffer l'habitacle. On comprend dans ce contexte que le prolongateur d'autonomie a été sélectionner pour chauffer l'habitable. Il est alors mis en état de marche de manière à produire une puissance électrique qui peut être utiliser pour recharger la batterie principale et/ou alimenter la chaine de traction, les calories produites parallèlement sont dirigées vers le dispositif de chauffage de l'habitacle qui alors peut les transférer à l'habitacle sans être alimenté électriquement par la batterie principale.

Selon un mode de réalisation, le niveau de charge de la batterie principale est, notamment périodiquement, détectée pendant que la batterie principale alimente électriquement le dispositif de chauffage.

Selon un mode de réalisation, si le niveau de charge de la batterie principale devient inférieur au niveau seuil, alors l'étape de sélection comprend une sous-étape de mise en état de marche du prolongateur d'autonomie pour alimenter la chaine de traction et/ou recharger la batterie principale, les calories conséquemment dégagées par le prolongateur d'autonomie étant utilisées pour chauffer l'habitacle.

Selon un mode de réalisation, la sous-étape de mise en état de marche comprend une phase de calcul de la puissance électrique que le prolongateur d'autonomie devrait produire pendant une durée de chauffe de manière à dégager les calories nécessaires au chauffage de l'habitacle pendant ladite durée de chauffe. Le calcul de la puissance électrique permet d'adapter la quantité de calories à produire pour chauffer l'habitacle et la puissance électrique apportée à la charge de la batterie principale.

Selon un mode de réalisation, la sous-étape de mise en état de marche comprend une phase d'estimation du niveau charge de la batterie principale après la durée de chauffe si la puissance électrique calculée est utilisée pour recharger la batterie principale pendant toute la durée de chauffe. Ainsi la batterie principale n'est pas rechargée au-delà de son niveau de charge maximum et la puissance électrique n'est alors pas gaspillée.

Selon un mode de réalisation, si le niveau de charge estimé à la phase d'estimation est inférieur à un niveau de charge maximum de la batterie principale, alors la phase d'estimation est suivie d'une phase de commande lors de laquelle une instruction de production de la puissance électrique calculée est envoyée au prolongateur d'autonomie pour recharger la batterie principale pendant la durée de chauffe. On comprend que la puissance électrique produite par le prolongateur d'autonomie correspond à la puissance électrique calculé et que le dégagement de calories résultant de la production de la puissance électrique calculée est utilisé pour chauffer l'habitacle pendant la durée de chauffe.

Selon un mode de réalisation, si le niveau de charge estimée à la phase d'estimation est supérieur à un niveau de charge maximal de la batterie principale, alors une phase d'évaluation de la puissance électrique à produire par le prolongateur d'autonomie est effectuée pour recharger la batterie principale pendant la durée de chauffe de manière à ce que le niveau de charge de la batterie principale soit inférieur au niveau de charge maximum à la fin de durée de chauffe. Ainsi on s'assure de ne pas charger la batterie principale au-delà de son niveau de charge maximum et donc on évite de perdre de la puissance électrique.

Selon un mode de réalisation, la phase d'évaluation est suivie d'une phase de commande lors de laquelle une instruction de production de la puissance électrique évaluée est envoyée au prolongateur d'autonomie pour recharger la batterie principale pendant la durée de chauffe. On comprend que la puissance électrique produite par le prolongateur d'autonomie correspond à la puissance électrique évaluée et que le dégagement de calories correspondant à la production de la puissance électrique évaluée est utilisé pour chauffer l'habitacle pendant la durée de chauffe

Selon un mode de réalisation, l'étape de détection du niveau de charge de la batterie principale est précédée d'une étape de réception d'une requête en chauffage de l'habitacle.

Selon un mode de réalisation, le prolongateur d'autonomie comprend un empilement de piles à combustibles.

Selon un mode de réalisation, le niveau seuil est égal à 80% de la charge maximum de la batterie principale.

La présente invention fournit également un véhicule électrique, notamment automobile, comprenant au moins une batterie principale configurée pour alimenter électriquement une chaine de traction du véhicule et pour être rechargée par une source extérieure d'énergie, un prolongateur d'autonomie comportant au moins une pile à combustible configurée pour produire, dans un état de marche, une puissance électrique, la production de puissance électrique s'accompagnant d'un dégagement de calories, un dispositif de chauffage de l'habitacle, un détecteur de l'état de charge de la batterie principale, un détecteur de l'état de fonctionnement du prolongateur d'autonomie, et un système de gestion électronique destiné à mettre en oeuvre le procédé selon la présente invention.

Selon un mode de réalisation, le dispositif de chauffage est une pompe à chaleur et/ou un radiateur à convection.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] La figure 1 est une vue schématique d'un véhicule électrique configuré pour mettre en oeuvre le procédé selon l'invention.
[fig 2] La figure 2 est un logigramme représentant les différentes étapes du procédé de chauffage selon l'invention permettant notamment de répondre à une demande de chauffage habitacle.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

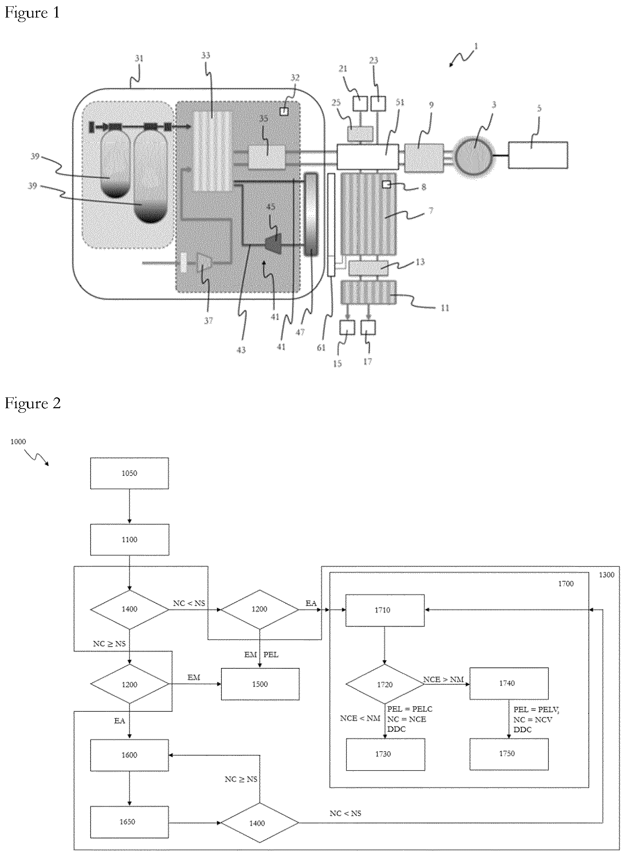

Le véhicule électrique 1, illustré schématiquement sur la figure 1, comprend un moteur électrique 3 directement relié à une chaine de traction 5 du véhicule électrique 1. Le moteur électrique 3 est configuré pour gérer la propulsion du véhicule. Le moteur électrique 3 est alimenté électriquement par une batterie principale 7. Le courant fourni par la batterie principale 7 est un courant continu qui est converti par un premier convertisseur 9 en un courant alternatif adapté pour le moteur électrique 3.

La batterie principale 7 est apte à garder en réserve une quantité d'énergie électrique afin de la fournir au moteur électrique 3 lorsque le besoin s'en fait sentir. Le niveau de charge NC de la batterie principale 7 diminue lorsque le moteur électrique 3 est en fonctionnement et que la batterie principale 7 n'est pas rechargée en parallèle. La vitesse de consommation de l'énergie électrique par le moteur électrique 3 peut varier en fonction de plusieurs paramètres liés au véhicule, par exemple la vitesse à laquelle le véhicule roule ou les équipements utilisés ou le chauffage et/ou la climatisation de l'habitacle. La batterie principale 7 est par exemple une batterie Lithium ion.

Le véhicule électrique 1 comprend en outre une batterie de servitude 11 pour le fonctionnement des accessoires 15, par exemple des dispositifs lumineux, et/ou des calculateurs 17 du véhicule électrique 1 et/ou du dispositif de chauffage 61 d'un habitacle du véhicule électrique 1. Le dispositif de chauffage 61 comprend un radiateur à convection et/ou une pompe à chaleur. La batterie de servitude 11 est rechargée par la batterie principale 7 en convertissant le courant continu haute tension, par exemple de 330 V, issu de la batterie principale 7 en un courant continu basse tension, par exemple 14V, grâce à un deuxième convertisseur 13.

La batterie principale 7 peut être rechargée par une source d'énergie extérieure 21, 23. Une source d'énergie extérieure 21, 23 peut être un courant alternatif en provenance d'une prise de courant d'une habitation 21 qu'il faut redresser grâce à un troisième convertisseur 25 interne à la voiture électrique 1. Une source d'énergie extérieure 21, 23 peut aussi être un courant continu issu d'un superchargeur 23 qui ne nécessite pas de passer par un convertisseur.

Le véhicule électrique 1 embarque aussi un prolongateur d'autonomie 31 c'est-à-dire un générateur destiné à accroître l'autonomie du véhicule électrique 1 en assurant la recharge de la batterie principale 7. Le prolongateur d'autonomie 31 et la batterie principale 7 sont configurés pour alimenter la chaîne de traction 5. Le prolongateur d'autonomie 31 est électriquement en parallèle de la batterie principale 7.

Le prolongateur d'autonomie 31 comprend un système de piles à combustible 33, un compresseur 37, au moins un réservoir d'un combustible réducteur 39 et un système de refroidissement 41. Les piles à combustible 33 sont aptes à produire une puissance électrique PEL par l'oxydation entre l'oxygène présent dans l'air et apporté par le compresseur 37 et le combustible réducteur, par exemple de l'hydrogène, contenu dans les réservoirs 39. La puissance électrique PEL est ensuite transmise par l'intermédiaire d'un onduleur 35 au moteur électrique. Cette puissance électrique PEL est également utilisée pour recharger la batterie principale 7 du véhicule électrique 1.

La réaction d'oxydation qui se produit dans les piles à combustible 33 pendant le fonctionnement du prolongateur d'autonomie génère des calories qui sont évacuées par le système de refroidissement 41. Le système de refroidissement 41 comprend un liquide de refroidissement qui circule en boucle dans une conduite 43 qui transporte le liquide de refroidissement entre le système de piles à combustible 33 et un échangeur de chaleur 47. La circulation du fluide réfrigérant dans le système de refroidissement 41 est régulée par une pompe 45. L'échangeur de chaleur 47 permet au fluide réfrigérant de se décharger de ses calories avec l'air extérieur au véhicule électrique 1 et/ou avec un aérotherme du dispositif de chauffage 61. L'aérotherme est en connexion calorifique avec l'habitacle du véhicule électrique 1. Ainsi les calories produites concomitamment à la puissance électrique PEL par les piles à combustible 33 peuvent permettre de chauffer l'habitacle du véhicule électrique 1 sans utiliser le radiateur à convection et/ou la pompe à chaleur.

Le véhicule électrique 1 comprend au moins un système de gestion électronique 51 qui est configuré pour gérer les flux d'énergie et de puissance entre les différents consommateurs grâce à une pluralité de capteurs par exemple un capteur du niveau de charge de la batterie principale 8 ou un capteur de l'état de fonctionnement du prolongateur d'autonomie 32. Le système de gestion électronique 51 peut ainsi évaluer les besoins en puissance électrique et en calories du véhicule électrique par exemple en fonction de la position de la pédale d'accélérateur et/ou en fonction du niveau de charge NC de la batterie principale 7 et/ou en fonction d'une demande de chauffage de l'habitacle du véhicule et/ou en fonction de l'état de fonctionnement du prolongateur d'autonomie 31.

Le procédé de chauffage 1000 de l'habitacle du véhicule électrique1 va maintenant être décrit. Un logigramme du procédé de chauffage est illustré sur la figure 2. Le procédé de chauffage 1000 est mise en oeuvre, dans le mode de réalisation illustré, par la système de gestion électronique du véhicule électrique 1.

Le procédé de chauffage 1000 peut être initié par la réception 1050 d'une requête en chauffage de l'habitacle. Cette requête peut être envoyée par un utilisateur c'est-à-dire le conducteur et/ou un des passagers. Cette requête peut aussi être automatiquement générée par le système de gestion électronique 51 pour maintenir la température de l'habitacle au-dessus d'une température seuil.

A la réception 1050 de cette requête en chauffage, le procédé de chauffage 1000 effectue une étape de détection 1100 du niveau de charge NC de la batterie principale 7 et une étape de détermination 1200 d'un état de fonctionnement EA, EM du prolongateur d'autonomie 31. L'étape de détection 1100 et l'étape de détermination 1200 peuvent être effectuées immédiatement l'une après l'autre ou en même temps. Dans l'exemple représenté sur la figure 2, l'étape de détection 1100 est effectuée avant l'étape de détermination 1200. Dans un mode de réalisation non représenté, l'étape de détermination est opérée avant l'étape de détection.

Le niveau de charge NC est mesuré par le capteur du niveau de charge de la batterie principale 8 qui envoie l'information au système de gestion électronique 51. Le niveau de charge de la batterie principale 7 oscille entre 0% et 100% de sa capacité maximale selon l'utilisation qui en est fait.

L'état de fonctionnement EA, EM du prolongateur d'autonomie 31 est fourni au système de gestion électronique 51 par le capteur de l'état de fonctionnement du prolongateur d'autonomie 32. Le prolongateur d'autonomie 31 ne peut dans le présent exemple adopter que deux états de fonctionnement : un état de marche EM c'est-à-dire qu'il produit une puissance électrique PEL accompagnée d'un dégagement de calories ou un état d'arrêt EA auquel cas le prolongateur d'autonomie 31 ne produit aucune puissance électrique.

Une étape de sélection 1300 est effectuée pour choisir entre l'alimentation électrique par la batterie principale et le dégagement de calories par le prolongateur d'autonomie 31 pour chauffer l'habitacle en fonction du niveau de charge de la batterie 7 obtenu à l'étape de détection 1100 et de l'état de fonctionnement EA, EM du prolongateur d'autonomie 31 obtenu à l'étape de détermination 1200.

L'étape de sélection 1300 s'effectue tout d'abord en comparant, dans une sous-étape de comparaison 1400, le niveau de charge NC de la batterie principale 7 qui a été détecté à l'étape de détection 1100 à un niveau seuil NS. A titre d'exemple, le niveau seuil NS est ici de 80% de la charge maximum de la batterie principale 7. Ce niveau seuil NS peut être relevé ou abaissé en fonction par exemple de la technologie de batterie principale utilisée. Il y a alors deux cas de figures possibles, à savoir soit le niveau de charge NC est inférieur au niveau seuil NS, soit le niveau de charge NC est supérieur ou égal au niveau seuil NS.

Cette sous-étape de comparaison 1400 peut être effectuée entre l'étape de détection 1100 et l'étape de détermination 1200 comme dans l'exemple indiqué sur la figure 2. Elle peut être effectuée après ou en même temps que l'étape de détermination 1200 tant que l'étape de détection 1100 a été effectuée.

Plusieurs cas de figure peuvent se présenter suite aux informations obtenues après l'étape de détermination 1200 et après la sous étape de comparaison 1400.

Un premier cas est que le prolongateur d'autonomie 31 est en état de marche EM et que le niveau de charge NC de la batterie principale 7 est supérieure ou égal au niveau seuil NS. Les calories dégagées par le prolongateur d'autonomie 31 sont alors utilisées pour une opération de chauffe de l'habitacle, via le dispositif de chauffage 61. Un deuxième cas est que le prolongateur d'autonomie 31 est en état de marche EM et que le niveau de charge NC est inférieur au niveau seuil NS. Les calories dégagées par le prolongateur d'autonomie 31 sont alors là aussi transférées à l'habitacle pour l'opération de chauffe 1500, via le dispositif de chauffage 61. Autrement dit, si l'état de fonctionnement EA, EM du prolongateur d'autonomie 31 est l'état de marche EM, alors les calories dégagées par le prolongateur d'autonomie 31 sont utilisées pour chauffer l'habitacle quel que soit le niveau de charge NC de la batterie principale 7. Ainsi le système de gestion électronique 51 a sélectionné le prolongateur d'autonomie 31 comme source de chaleur pour l'habitacle.

Un troisième cas est que le prolongateur d'autonomie 31 est en état d'arrêt EA et que le niveau de charge NC de la batterie principale 7 détecté est supérieur ou égal au niveau seuil NS, alors l'étape de sélection 1300 aboutit à choisir la batterie principale 7 pour alimenter électriquement le dispositif de chauffage 61. L'étape de sélection 1300 comprend une sous-étape de commande 1600 qui consiste à envoyer une instruction à la batterie principale 7 pour alimenter en électricité le dispositif de chauffage 61. Le radiateur à convection du dispositif de chauffage 61 va alors produire une puissance thermique qui va chauffer l'habitacle. Le prolongateur d'autonomie 31 reste en état d'arrêt EA.

La batterie principale 7 se décharge donc en alimentant le dispositif de chauffage 61. Il peut donc être important de mesurer périodiquement le niveau de charge de la batterie principale 7 au cours d'une sous-étape de mesure 1620 de l'étape de sélection 1300 pendant que la batterie principale 7 alimente électriquement le dispositif de chauffage 61. Après chaque sous-étape de mesure 1620, la sous-étape de comparaison 1400 est effectuée. Si le niveau de charge NC de la batterie principale 7 est supérieur ou égale au niveau seuil NS, alors 1660 le système de gestion électronique 51 laisse la batterie principale continuer à alimenter électriquement le dispositif de chauffage 61. En revanche, si, au cours de la sous-étape de comparaison 1400, il est conclu que le niveau de charge NC de la batterie principale 7 est inférieur au niveau seuil NS, alors l'étape de sélection 1300 procède à une sous-étape de mise en état de marche 1700 du prolongateur d'autonomie 31. La sous-étape de mise en état de marche 1700 va être décrite ci-après.

Un quatrième cas est que l'état de fonctionnement EA, EM du prolongateur d'autonomie 31 détecté est un état d'arrêt EA et le niveau de charge NC de la batterie principale 7 détecté est inférieur au niveau seuil NS, alors le système de gestion électronique 51 fait le choix du prolongateur d'autonomie 31 pour répondre à la requête en chauffage de l'habitacle. Etant donné que le prolongateur d'autonomie 31 est en état d'arrêt EA, l'étape de sélection 1300 comprend une sous-étape de mise en état de marche 1700 du prolongateur d'autonomie 31. Le prolongateur d'autonomie 31 va alors produire une puissance électrique PEL accompagnée d'un dégagement de calories. La puissance électrique PEL produite peut alors être employée à recharger la batterie principale 7 et/ou à alimenter la chaine de traction du véhicule électrique 1.

Pour optimiser l'énergie consommée au sein du véhicule, il est peut-être intéressant de contrôler, suite à la mise en état de marche EM du prolongateur d'autonomie 31, la quantité exacte de puissance électrique PEL produite qui va servir à recharger la batterie principale 7 et dont les calories dégagées vont servir à chauffer l'habitacle. La sous-étape de mise en marche 1700 va, dans ce cadre, comprendre un phase de calcul 1710 de la puissance électrique PELC que le prolongateur d'autonomie 31 devrait produire pendant une durée de chauffe DDC de manière à dégager les calories pour répondre à la requête en chauffage de l'habitacle.

Il convient alors d'estimer le niveau de charge NCE de la batterie principale 7 si elle était rechargée grâce à la puissance électrique calculée PELC pendant la durée de chauffe DDC. Cette opération est effectuée lors d'une phase d'estimation 1720 de la sous-étape de mise en état de marche 1700.

Si le niveau de charge estimé NCE à la phase d'estimation 1720 est inférieur à un niveau de charge maximum NM de la batterie principale 7, alors la phase d'estimation 1720 est suivie d'une phase de commande 1730. Lors de cette phase de commande 1730 une instruction de production de puissance électrique PEL qui doit être égale à la puissance électrique calculée PELC est envoyée au prolongateur d'autonomie 31. Ainsi la batterie principale 7 est rechargée pendant la durée de DDC. De plus les calories ainsi produites correspondront à la quantité de calories calculée et l'habitacle sera donc chauffé pendant la durée de chauffe DDC. La requête de chauffage de l'habitacle sera honorée.

Si la puissance électrique calculée PELC conduit à un niveau de charge estimé NCE de la batterie principale 7 qui est au-delà du niveau de charge maximum NM, alors une partie de la puissance électrique calculée serait perdue en supposant qu'une instruction ait été envoyée au prolongateur d'autonomie de produire une puissance électrique PEL égale à la puissance électrique calculée PELC.

Il convient alors, au cours d'une phase d'évaluation 1740, d'évaluer la puissance électrique PELV à produire par le prolongateur d'autonomie 31 de manière à ce que le niveau de charge estimé NCE de la batterie principale 7 soit en deçà du niveau de charge maximum NM de la batterie principale 7 après la durée de chauffe DDT. La puissance électrique évaluée PELV à la phase d'évaluation 1740 sera logiquement inférieure à la puissance électrique calculée PELC lors de la phase de calcul 1710. La consommation d'électricité dans le véhicule électrique sera ainsi optimisée. En contrepartie, la requête en demande de chauffage ne pourra donc pas être entièrement satisfaite et une différence de température minime pourrait être observée entre la température de l'habitacle obtenue du fait que le prolongateur a produit la puissance électrique évaluée PELV et la température de l'habitacle qu'on aurait obtenue si le prolongateur d'autonomie avait produit la puissance électrique calculée PELC.

La phase d'évaluation 1740 est ensuite suivie d'une phase de commande 1750 une instruction de production de puissance électrique PEL qui doit être égale à la puissance électrique évaluée PELV est envoyée au prolongateur d'autonomie 31. Ainsi la batterie principale 7 est rechargée pendant la durée de chauffe DDC. Suite à la durée de chauffe DDC, le niveau de charge NC de la batterie principale 7 sera égale à +/- 5% du niveau de charge maximum de ladite batterie principale 7. De plus le dégagement de calories accompagnant la génération de la puissance électrique qui est égale à la puissance électrique évaluée PELV sont transmis à l'habitacle pendant la durée de chauffe DDC par le dispositif de chauffage 61.

Bien sûr, l'invention n'est pas limitée aux exemples qui viennent d'être décrits et de nombreux aménagements peuvent être apportés à ces exemples sans sortir du cadre de l'invention telle que définie dans les revendications.

L'invention, telle qu'elle vient d'être décrite, atteint bien le but qu'elle s'était fixée, et permet de proposer un procédé de chauffage d'un habitacle de véhicule électrique permettant de répondre à une demande de chauffage habitacle en minimisant l'impact sur la quantité d'énergie embarquée et donc sur l'autonomie du véhicule.

## Revendications

1. Procédé de chauffage (1000) d'un habitacle de véhicule électrique (1) qui comporte au moins une batterie principale (7) configurée pour alimenter électriquement une chaine de traction (3) du véhicule électrique (1) et pour participer à l'alimentation électrique d'un dispositif de chauffage (61) de l'habitacle et pour être rechargée par une source extérieure d'énergie (21, 23), un prolongateur d'autonomie (31) comprenant au moins une pile à combustible (33) configurée pour produire, dans un état de marche, une puissance électrique (PEL) pour fournir une alimentation électrique alternative de la chaine de traction (3) et/ou pour recharger la batterie principale (7), la production de puissance électrique (PEL) par le prolongateur d'autonomie (31) s'accompagnant d'un dégagement de calories susceptible d'être dirigé vers le dispositif de chauffage (31) de l'habitacle, ledit procédé de chauffage (1000) comprenant une étape de détection (1100) du niveau de charge (NC) de la batterie principale (7), une étape de détermination (1200) d'un état de fonctionnement (EA, EM) du prolongateur d'autonomie (31), une étape de sélection (1300) entre l'alimentation électrique du dispositif de chauffage (61) par la batterie principale (7) et le dégagement de calories par le prolongateur d'autonomie (31) pour chauffer l'habitacle en fonction du niveau de charge (NC) de la batterie principale (7) et de l'état de fonctionnement (EA, EM) du prolongateur d'autonomie (31), l'étape de sélection (1300) comprenant une sous-étape de comparaison (1400) entre le niveau de charge (NC) de la batterie principale (7) détecté et à un niveau seuil (NS) au-dessus duquel les calories dégagées par le prolongateur d'autonomie (31) peuvent être utilisées pour chauffer l'habitacle et en-dessous duquel les calories dégagées par le prolongateur d'autonomie (31) sont utilisées pour chauffer l'habitacle et la puissance électrique (PEL) produite par le prolongateur d'autonomie (31) peut être utilisée pour recharger la batterie principale (7).

2. Procédé de chauffage (1000) selon la revendication précédente, au cours duquel si l'état de fonctionnement (EA, EM) détecté est l'état de marche (EM) alors le dégagement de calories par le prolongateur d'autonomie (31) est utilisé pour une opération de chauffe de l'habitacle (1500).

3. Procédé de chauffage (1000) selon la revendication 1, au cours duquel si l'état de fonctionnement (EA, EM) du prolongateur d'autonomie (31) détecté est un état d'arrêt (EA) et si le niveau de charge (NC) de la batterie principale (7) détecté est supérieur ou égal au niveau seuil (NS), alors l'étape de sélection (1300) comprend une sous-étape de commande (1600) lors de laquelle une instruction d'alimentation en électricité du dispositif de chauffage (61) est envoyé à la batterie principale (7) de manière à ce que l'habitacle soit chauffé par le dispositif de chauffage (61).

4. Procédé de chauffage (1000) selon la revendication 1, au cours duquel si l'état de fonctionnement (EA, EM) du prolongateur d'autonomie (31) détecté est un état d'arrêt (EA) et si le niveau de charge (NC) de la batterie principale (7) détecté est inférieur au niveau seuil (NS), alors l'étape de sélection (1300) comprend une sous-étape de mise en état de marche (1700) du prolongateur d'autonomie (31) et les calories alors dégagées par le prolongateur d'autonomie (31) sont utilisées pour chauffer l'habitacle.

5. Procédé de chauffage (1000) selon la revendication 4, au cours duquel la sous-étape de mise en état de marche (1700) comprend une phase de calcul (1710) de la puissance électrique (PELC) que le prolongateur d'autonomie (31) devrait produire pendant une durée de chauffe (DDC) de manière à dégager les calories nécessaires au chauffage de l'habitacle pendant ladite durée de chauffe.

6. Procédé de chauffage (1000) selon la revendication précédente, au cours duquel la sous-étape de mise en état de marche (1700) comprend une phase d'estimation (1720) du niveau charge (NCE) de la batterie principale (7) après la durée de chauffe (DDE) si la puissance électrique calculée (PELC) est utilisée pour recharger la batterie principale (7) pendant toute la durée de chauffe (DDC).

7. Procédé de chauffage (1000) selon la revendication précédente, au cours duquel si le niveau de charge estimé (NCE) à la phase d'estimation (1720) est inférieur à un niveau de charge maximum (NM) de la batterie principale (7), alors la phase d'estimation (1720) est suivie d'une phase de commande (1730) lors de laquelle une instruction de production de la puissance électrique calculée (PELC) est envoyée au prolongateur d'autonomie (31) pour recharger la batterie principale (7) pendant la durée de chauffe (DDT).

8. Procédé de chauffage (1000) selon la revendication 6, au cours duquel si le niveau de charge estimée (NCE) à la phase d'estimation (1720) est supérieur à un niveau de charge maximal (NM) de la batterie principale (7), alors une phase d'évaluation (1740) de la puissance électrique (PELV) à produire par le prolongateur d'autonomie (31) est effectuée pour recharger la batterie principale (7) pendant la durée de chauffe (DDC) de manière à ce que le niveau de charge (NCV) de la batterie principale (7)soit inférieur au niveau de charge maximum (NM) à la fin de durée de chauffe (DDC).

9. Procédé de chauffage (1000) selon la revendication précédente, au cours duquel la phase d'évaluation (1740) est suivie d'une phase de commande (1750) lors de laquelle une instruction de production de la puissance électrique évaluée (PELV) est envoyée au prolongateur d'autonomie (31) pour recharger la batterie principale (7) pendant la durée de chauffe (DDC).

10. Véhicule électrique (1) comprenant au moins une batterie principale (7) configurée pour alimenter électriquement une chaine de traction (5) du véhicule électrique et pour être rechargée par une source extérieure d'énergie (21, 23), un prolongateur d'autonomie (31) comportant au moins une pile à combustible (33) configurée pour produire, dans un état de marche, une puissance électrique (PEL), la production de puissance électrique (PEL) s'accompagnant d'un dégagement de calories, un dispositif de chauffage (61) de l'habitacle, un capteur du niveau de charge de la batterie principale (8), un capteur de l'état de fonctionnement du prolongateur d'autonomie (32), et un système de gestion électronique (51) destiné à mettre en oeuvre le procédé selon l'une quelconque des revendications précédentes.

## Patentansprüche

1. Verfahren zum Beheizen (1000) eines Innenraums eines Elektrofahrzeugs (1), umfassend mindestens eine Hauptbatterie (7), die dazu konfiguriert ist, einen Antriebsstrang (3) des Elektrofahrzeugs (1) elektrisch zu versorgen und zur elektrischen Versorgung einer Innenraum-Heizvorrichtung (61) beizutragen und durch eine externe Energiequelle (21, 23) aufgeladen zu werden, eine Reichweitenverlängerung (31), die mindestens eine Brennstoffzelle (33) umfasst, die dazu konfiguriert ist, im Betriebszustand eine elektrische Leistung (PEL) zu erzeugen, um eine alternative elektrische Leistungsversorgung für den Antriebsstrang (3) zur Verfügung zu stellen und/oder die Hauptbatterie (7) aufzuladen, wobei die Erzeugung elektrischer Leistung (PEL) durch die Reichweitenverlängerung (31) von einer Freisetzung von Kalorien begleitet wird, die zur Innenraum-Heizvorrichtung (31) lenkbar ist, wobei das Verfahren zum Beheizen (1000) einen Schritt des Erkennens (1100) des Ladestands (NC) der Hauptbatterie (7), einen Schritt des Bestimmens (1200) eines Betriebszustands (EA, EM) der Reichweitenverlängerung (31), einen Schritt des Auswählens (1300) zwischen der elektrischen Versorgung der Heizvorrichtung (61) durch die Hauptbatterie (7) und der Freisetzung von Kalorien durch die Reichweitenverlängerung (31) umfasst, um den Innenraum abhängig vom Ladestand (NC) der Hauptbatterie (7) und dem Betriebszustand (EA, EM) der Reichweitenverlängerung (31) zu beheizen, wobei der Schritt des Auswählens (1300) einen Teilschritt des Vergleichens (1400) zwischen dem erkannten Ladestand (NC) der Hauptbatterie (7) und einem Schwellenwert (NS) umfasst, oberhalb dessen die von der Reichweitenverlängerung (31) freigesetzten Kalorien zum Beheizen des Innenraums genutzt werden können und unterhalb dessen die von der Reichweitenverlängerung freigesetzten Kalorien (31) zum Beheizen des Innenraums genutzt werden und die von der Reichweitenverlängerung (31) erzeugte elektrische Leistung (PEL) zum Aufladen der Hauptbatterie (7) genutzt werden kann.

2. Verfahren zum Beheizen (1000) nach dem vorhergehenden Anspruch, bei dem, wenn der erkannte Betriebszustand (EA, EM) der Betriebszustand (EM) ist, die Freisetzung der Kalorien durch die Reichweitenverlängerung (31) für einen Heizvorgang des Innenraums (1500) genutzt wird.

3. Verfahren zum Beheizen (1000) nach Anspruch 1, bei dem, wenn der erkannte Betriebszustand (EA, EM) der Reichweitenverlängerung (31) ein Ausschaltzustand (EA) ist und wenn der erkannte Ladestand (NC) der Hauptbatterie (7) größer oder gleich dem Schwellenwert (NS) ist, der Schritt des Auswählens (1300) einen Teilschritt des Steuerns (1600) beinhaltet, wobei eine Anweisung zur elektrischen Versorgung der Heizvorrichtung (61) an die Hauptbatterie (7) gesendet wird, so dass der Innenraum durch die Heizvorrichtung (61) beheizt wird.

4. Verfahren zum Beheizen (1000) nach Anspruch 1, bei dem, wenn der erkannte Betriebszustand (EA, EM) der Reichweitenverlängerung (31) ein Ausschaltzustand (EA) ist und wenn der erkannte Ladestand (NC) der Hauptbatterie (7) niedriger ist als der Schwellenwert (NS), der Schritt des Auswählens (1300) einen Teilschritt des Versetzens der Reichweitenverlängerung (31) in den Betriebszustand (1700) umfasst und die dann von der Reichweitenverlängerung (31) freigesetzten Kalorien zum Beheizen des Innenraums genutzt werden.

5. Verfahren zum Beheizen (1000) nach Anspruch 4, bei dem der Teilschritt des Einschaltens (1700) eine Phase des Berechnens (1710) der elektrischen Leistung (PELC) umfasst, die die Reichweitenverlängerung (31) während einer Heizdauer (DDC) erzeugen sollte, um während der Heizdauer die zum Beheizen des Innenraums notwendigen Kalorien freizusetzen.

6. Verfahren zum Beheizen (1000) nach dem vorhergehenden Anspruch, bei dem der Teilschritt des Einschaltens (1700) eine Phase des Schätzens (1720) des Ladestands (NCE) der Hauptbatterie (7) nach der Heizdauer (DDE) umfasst, wenn die berechnete elektrische Leistung (PELC) während der gesamten Heizdauer (DDC) zum Aufladen der Hauptbatterie (7) genutzt wird.

7. Verfahren zum Beheizen (1000) nach dem vorhergehenden Anspruch, bei dem, wenn der geschätzte Ladestand (NCE) in der Phase des Schätzens (1720) niedriger ist als ein maximaler Ladestand (NM) der Hauptbatterie (7), auf die Phase des Schätzens (1720) eine Phase des Steuerns (1730) folgt, wobei eine Anweisung zur Erzeugung der berechneten elektrischen Leistung (PELC) an die Reichweitenverlängerung (31) gesendet wird, während der Heizdauer (DDT) die Hauptbatterie (7) aufzuladen.

8. Verfahren zum Beheizen (1000) nach Anspruch 6, bei dem, wenn der geschätzte Ladestand (NCE) in der Phase des Schätzens (1720) größer ist als ein maximaler Ladestand (NM) der Hauptbatterie (7), sodann eine Phase des Bewertens (1740) der durch die Reichweitenverlängerung (31) zu erzeugenden elektrischen Leistung (PELV) ausgeführt wird, um die Hauptbatterie (7) während der Heizdauer (DDC) aufzuladen, so dass der Ladestand (NCV) der Hauptbatterie (7) am Ende der Heizdauer (DDC) niedriger ist als der maximale Ladestand (NM).

9. Verfahren zum Beheizen (1000) nach dem vorhergehenden Anspruch, bei dem auf die Phase des Bewertens (1740) eine Phase des Steuerns (1750) folgt, wobei eine Anweisung zur Erzeugung der bewerteten elektrischen Leistung (PELV) an die Reichweitenverlängerung (31) gesendet wird, um die Hauptbatterie (7) während der Heizdauer (DDC) aufzuladen.

10. Elektrofahrzeug (1), umfassend mindestens eine Hauptbatterie (7), die dazu konfiguriert ist, einen Antriebsstrang (5) des Elektrofahrzeugs elektrisch zu versorgen und durch eine externe Energiequelle (21, 23) aufgeladen zu werden, eine Reichweitenverlängerung (31), die mindestens eine Brennstoffzelle (33) umfasst, die dazu konfiguriert ist, im Betriebszustand eine elektrische Leistung (PEL) zu erzeugen, wobei die Erzeugung elektrischer Leistung (PEL) von einer Freisetzung von Kalorien begleitet ist, eine Innenraum-Heizvorrichtung (61), einen Hauptbatterie-Ladesensor (8), einen Betriebszustandssensor der Reichweitenverlängerung (32) und ein elektronisches Steuerungssystem (51) für die Umsetzung des Verfahrens nach einem der vorhergehenden Ansprüche.

## Claims

1. Method (1000) for heating a passenger compartment of an electric vehicle (1) that comprises at least one main battery (7) that is configured to power electrically a powertrain (3) of the electric vehicle (1) and to participate in the supply of electrical power to a device (61) for heating the passenger compartment and to be recharged by an external power source (21, 23), a range extender (31) comprising at least one fuel cell (33) configured to generate, in an on state, electrical power (PEL) with a view to providing an AC electrical power supply to the powertrain (3) and/or to recharging the main battery (7), the generation of electrical power (PEL) by the range extender (31) being accompanied by a release of heat capable of being directed to the device (31) for heating the passenger compartment, said heating method (1000) comprising a step (1100) of detecting the level of charge (NC) of the main battery (7), a step (1200) of determining an operating state (EA, EM) of the range extender (31), a step (1300) of selecting between the supply of electrical power to the heating device (61) by the main battery (7) and the release of heat by the range extender (31) to heat the passenger compartment depending on the level of charge (NC) of the main battery (7) and on the operating state (EA, EM) of the range extender (31), the selecting step (1300) comprising a sub-step (1400) of comparing the detected level of charge (NC) of the main battery (7) and a threshold level (NS) above which the heat released by the range extender (31) may be used to heat the passenger compartment and below which the heat released by the range extender (31) is used to heat the passenger compartment and the electrical power (PEL) generated by the range extender (31) may be used to recharge the main battery (7).

2. Heating method (1000) according to the preceding claim, wherein, if the detected operating state (EA, EM) is the on state (EM), then the release of heat by the range extender (31) is used in an operation (1500) of heating the passenger compartment.

3. Heating method (1000) according to Claim 1, wherein, if the detected operating state (EA, EM) of the range extender (31) is an off state (EA), and if the detected level of charge (NC) of the main battery (7) is greater than or equal to the threshold level (NS), then the selecting step (1300) comprises a controlling sub-step (1600) in which an instruction to supply electricity to the heating device (61) is sent to the main battery (7) so that the passenger compartment is heated by the heating device (61).

4. Heating method (1000) according to Claim 1, wherein, if the operating state (EA, EM) of the detected range extender (31) is an off state (EA) and if the detected level of charge (NC) of the main battery (7) is less than the threshold level (NS), then the selecting step (1300) comprises a sub-step (1700) of starting up the range extender (31), and the heat then released by the range extender (31) is used to heat the passenger compartment.

5. Heating method (1000) according to Claim 4, wherein the starting-up sub-step (1700) comprises a phase (1710) of computing the electrical power (PELC) that the range extender (31) should generate during a heating period (DDC) so as to release the heat necessary for heating the passenger compartment during said heating period.

6. Heating method (1000) according to the preceding claim, wherein the starting-up sub-step (1700) comprises a phase (1720) of estimating the level of charge (NCE) of the main battery (7) after the heating period (DDE) if the computed electrical power (PELC) is used to recharge the main battery (7) throughout the heating period (DDC).

7. Heating method (1000) according to the preceding claim, wherein, if the level of charge (NCE) estimated in the estimating phase (1720) is less than a maximum level of charge (NM) of the main battery (7), then the estimating phase (1720) is followed by a controlling phase (1730) in which an instruction to generate the computed electrical power (PELC) is sent to the range extender (31) with a view to recharging the main battery (7) during the heating period (DDT).

8. Heating method (1000) according to Claim 6, wherein, if the level of charge (NCE) estimated in the estimating phase (1720) is greater than a maximum level of charge (NM) of the main battery (7), then a phase (1740) of evaluating the electrical power (PELV) to be generated by the range extender (31) is carried out with a view to recharging the main battery (7) during the heating period (DDC) so that the level of charge (NCV) of the main battery (7) is less than the maximum level of charge (NM) at the end of the heating period (DDC).

9. Heating method (1000) according to the preceding claim, wherein the evaluating phase (1740) is followed by a controlling phase (1750) in which an instruction to generate the evaluated electrical power (PELV) is sent to the range extender (31) with a view to recharging the main battery (7) during the heating period (DDC).

10. Electric vehicle (1) comprising at least one main battery (7) that is configured to power electrically a powertrain (5) of the electric vehicle and to be recharged by an external power source (21, 23), a range extender (31) comprising at least one fuel cell (33) configured to generate, in an on state, electrical power (PEL), the generation of electrical power (PEL) being accompanied by a release of heat, a device (61) for heating the passenger compartment, a sensor (8) of the level of charge of the main battery, a sensor (32) of the operating state of the range extender, and an electronic management system (51) intended to implement the method according to any one of the preceding claims.
